Europäisches Patentamt

European Patent Office

Office européen des brevets

(11) Publication number: **0 273 525 B1**

## EUROPEAN PATENT SPECIFICATION

(45) Date of publication of patent specification: **27.02.91**

(51) Int. Cl.⁵: **B60K 15/04**

(21) Application number: **87202574.7**

(22) Date of filing: **18.12.87**

(54) **Device for supporting the fuel charging filler for motor vehicles.**

(30) Priority: **30.12.86 IT 2426486 U**

(43) Date of publication of application:
**06.07.88 Bulletin 88/27**

(45) Publication of the grant of the patent:
**27.02.91 Bulletin 91/09**

(84) Designated Contracting States:
**DE ES FR GB**

(56) References cited:
**EP-A- 0 030 531
DE-A- 2 852 855
DE-A- 3 301 072
FR-A- 2 474 575
US-A- 3 334 779**

(73) Proprietor: **ALFA LANCIA S.p.A.**
**Viale Alfa Romeo**
**I-20020 Arese, Milan(IT)**

(72) Inventor: **Pasquali, Renato**
**Via Roma 89**
**I-20024 Garbagnate Milanese Milan(IT)**
Inventor: **Verga, Luigi**
**Via Manzoni 12**
**I-22070 Vertemate con Minoprio Como(IT)**

(74) Representative: **De Carli, Erberto et al**
**ING. BARZANO' & ZANARDO MILANO S.p.A.**
**Via Borgonuovo, 10**
**I-20121 Milano(IT)**

Rank Xerox (UK) Business Services

## Description

The present invention relates to a vehicle fuel filler unit according to the preamble of claim 1.

It is known that motor vehicles are generally equipped with a device for fuel charging, located on the outer skin of the rear side portion of the bodywork, and formed by a metal part, or a rubber part, which defines a housing for the fuel filler and for the relating sealing cap, and is welded, or otherways fastened, to the metal sheet of the bodywork at an opening provided on the same bodywork. Due to aesthetical and aerodynamic reasons, the filler sealing cap is covered, or masked, with a cover, which, in most cases, is directly hinged to an edge provided on the metal sheet of the same bodywork.

It is clear that during the step of assemblage of the filler, and of the relevant cover, a number of interventions are necessary, which must be carried out directly on the same bodywork, and it is known as well that such interventions, by the assembler, are rather critical, due to reasons of little available room.

In an attempt to facilitate these interventions, FR-A-2 474 575 suggests a vehicle fuel filler unit of the type according to the preamble of claim 1, in which a single fixture is provided for securing the cup-shaped body and the bracket to the vehicle bodywork.

To this end, the cup-shaped body and the bracket each have a bore at a position corresponding to a bore of an inwardly protruding part of the skin of the bodywork, and they are secured to this part by threaded elements passing through the aligned bores of the skin, the cup-shaped body and the bracket. The threaded elements have to be hollow to allow a rod of the latch means to pass therethrough for locking the cover in the closed position thereof.

The assemblage of such a known filler unit, however, needs time and skill for having all the elements correctly positioned and then secured together.

Tools are moreover necessary for assembling the cover to the cup-shaped body.

The purpose of the present invention is to provide a vehicle fuel filler unit, whose assemblage onto the bodywork of the motor vehicle is extremely simplified.

This purpose is achieved by a vehicle fuel filler unit according to claim 1.

Accordingly, an easy assemblable complete filler unit equipped with the cover and the actuator for the latter is easily mountable as a single piece unit onto the bodywork, thus eliminating critical interventions on the bodywork.

The invention will now be described by referring to the hereto attached Figures 1, 2 and 3, wherein, as a non-limitative example, a preferred practical embodiment of the same invention is shown.

Figure 1 shows a plan view of a vehicle fuel filler unit according to the present invention, wherein the hinging of the cover to the cup-shaped body is also visible.

Figure 2 shows a sectional view according to path II-II of Figure 1.

Figure 3 shows an enlarged sectional view according to path III-III of Figure 2.

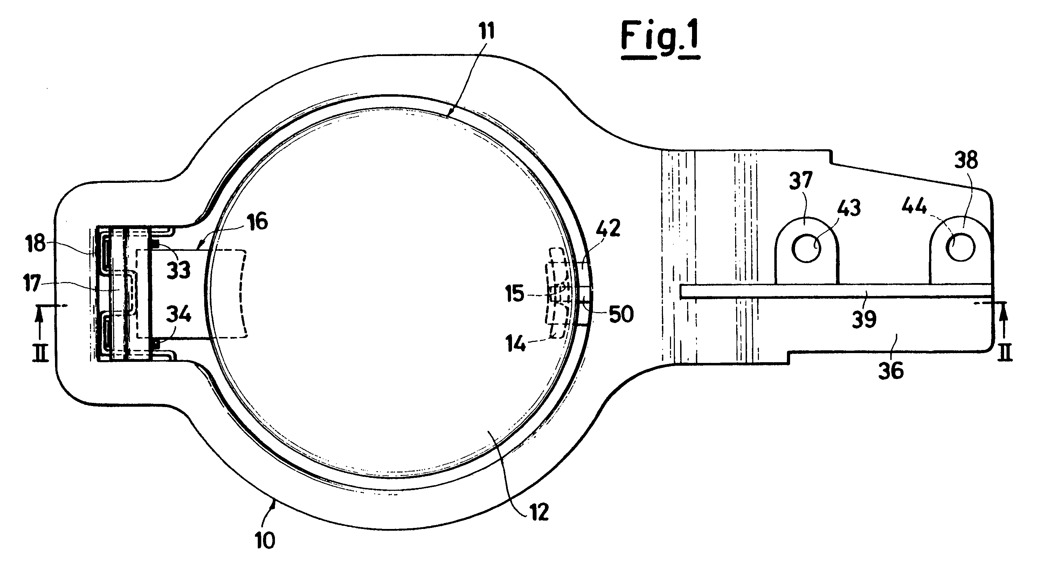

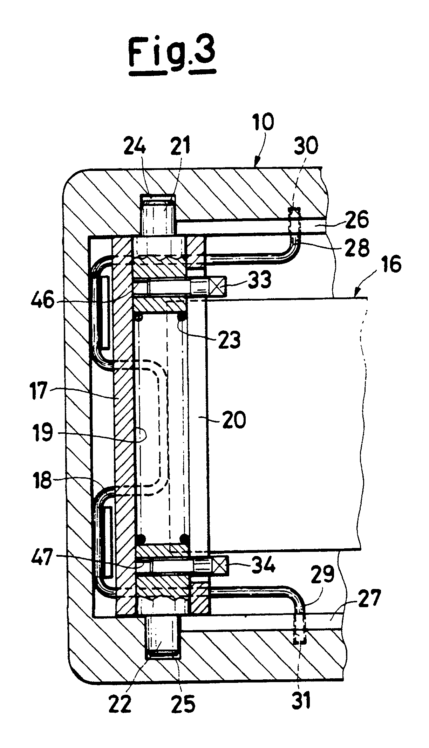

In Figures 1, 2 and 3, the reference numeral 10 indicates the cup-shaped body for the filler (with the relevant cap), not shown in the figures, and the reference numeral 11 generally indicates the sealing cover, with said sealing cover 11 being constituted by a plate 12 of a substantially circular shape, provided, on the side of its internal surface 13, with a protruding edge 14, wherein a countersunk bore 15 is provided, which is suitable for receiving a locking latch 50 of an electrical actuator 51.

In a position diametrically opposite to the edge 14, the cover 11 is provided with an essentially "U"-shaped arm 16, which forms one single piece with the plate 12, and whose free end 17 is provided with a through bore 19, extending parallelly to the curvature of the "U". The numeral 20 indicates a hollow, provided on the end 17, parallelly to the through bore 19, and the numerals 21 and 22 indicate two pivot pins, each having a bore 46 and, respectively, 47, suitable for receiving a respective protruding peg 33, 34, inserted through the hollow 20. A cylindrical spring 23, located coaxially between the pivot pins 21 and 22 inside the through bore 19, axially urges the pivot pins 21 and 22 into facing cylindrical seats 24 and 25 provided in protruding opposite wall portions of the body 10 and suitable for rotatably receiving the pivot pins 21 and 22. The reference numerals 26 and 27 indicate invitation guides which extend in said opposite wall portions between the inside of the body 10 and the seats 24 and 25 and which perform the task of facilitating the assemblage of pivot pins 21 and 22 into their respective cylindrical seats 24 and 25. A cylindrical spring 18, acting in the direction of opening of the cover 11, has a central portion which engages the "U"-shaped portion 16 of the cover 11, and respective ends 28 and 29 retained on the container 10 inside hollows, respectively indicated by the reference numerals 30 and 31.

Inside the interior portion of the cup-shaped body 10, a stop bracket 32 for the cover 11 is shaped, which is provided with an elastic stop portion 45 destined to come into engagement with the free end of the edge 14, and by the reference numeral 35 an opening of substantially circular shape is indicated, which is destined to receive the fuel charging pipe, not shown in the figures.

The cup-shaped body 10 is furthermore provided, at the side opposite to the side on which the cover 11 is hinged, with a bracket 36, on which there are protrusions 37 and 38 with bores 43 and 44, for the fastening of the electrical actuator 51 by means of fastening screws 52 and 53. By the reference numerals 39 and 40, strengthening ribs for the bracket 36 are indicated, and by 41 a bore in the cup-shaped body 10 is indicated, to allow the passage of the locking latch 50.

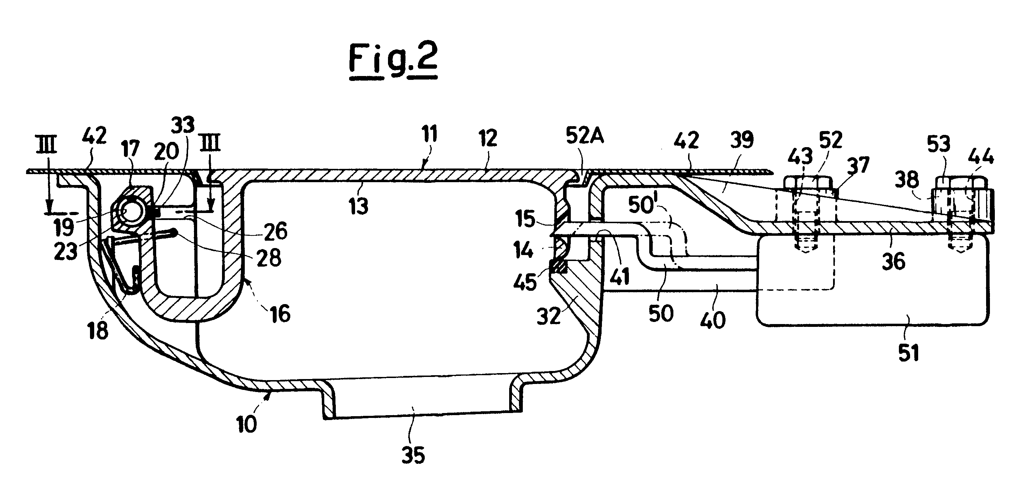

In Figure 2, the metal sheet 42 of the bodywork of the motor vehicle is shown, to which the fuel filler unit is fastened, e.g., adhesive-bonded, in such a way that the cover 11 comes to lie at an opening 52A of the metal sheet 42, with the cup-shaped body 10 being complete, equipped with the cover and the electrical cover actuator.

In order to open the cover 11, the electrical actuator 51 is energized, and moves the latch 50 towards itself, as shown by the dashed line 50'; as soon as the door 50 has left the countersunk bore 15, the spring 18 urges the cover 11 outwards; in the meantime, the actuator 51, de-energized, makes the latch 50 return back to its initial position. To shut the cover 11 again, it is enough to push it, up to overcome the force of a spring, not shown, which counteracts the rearwards motion of the latch 50.

Instead of two pivot pins 21, 22, one single pivot pin could be resiliently received in the seats 24, 25.

## Claims

1. Vehicle fuel filler unit comprising a cup-shaped body (10), a cover (11) hinged thereto and a bracket (36) for supporting electrically actuatable latch means (50, 51) for said cover (11), said cup-shaped body (10), cover (11) and bracket (36) being securable to the metal sheet (42) of the bodywork of the motor vehicle at an opening (52A) provided on the bodywork, characterized in that the bracket (36) is made as one single piece with the cup-shaped body (10), and in that opposite said bracket (36) the cup-shaped body (10) has protruding opposite wall portions having two facing cylindrical seats (24, 25) resiliently receiving at least one pivot pin (21, 22) of said cover (11), whereby invitation guides (26,27) extend in said wall portions from the inside of the cup-shaped body (10) to said cylindrical seats (24, 25) for assembling said pivot pin (21, 22).

2. Vehicle fuel filler unit according to claim 1, characterized in that two pivot pins (21, 22), with the interposition of a cylindrical spring (23) coaxial with the pivot pins (21, 22), are provided.

3. Vehicle fuel filler unit according to claim 1 or 2, characterized in that said at least one pivot pin (21, 22) is housed in a through bore (19) of an essentially "U"-shaped arm (16) of said cover (11).

4. Vehicle for fuel filler unit according to claim 3, characterized in that said arm (16) has a hollow (20) extending adjacent said through bore (19) parallel thereto, and in that said pivot pin or pins (21,22) receive protruding pegs (33,34) inserted through said hollow (20).

## Revendications

1. Elément de. remplissage de carburant de véhicule, comprenant un corps (10) en forme de cuvette, un couvercle (11) articulé sur le corps et un support (36) destiné à supporter un dispositif (50, 51) de verrouillage du couvercle (11) qui peut être commandé électriquement. le corps en forme de cuvette (10), le couvercle (11) et le support (36) étant destinés à être fixés à une feuille métallique (42) de la carrosserie du véhicule à moteur au niveau d'une ouverture (52A) formée sur la carrosserie. caractérisé en ce que le support (36) est formé en une seule pièce avec le corps (10) en forme de cuvette, et en ce que, du côté opposé au support (36). le corps (10) en forme de cuvette a des parties opposées de paroi en saillie ayant deux sièges cylindriques (24. 25) tournés l'un vers l'autre et logeant élastiquement au moins un axe de pivotement (21. 22) du couvercle (11) de sorte que des guides (26. 27) d'invitation sont formés dans les parties de paroi de l'intérieur du corps (10) en forme de cuvette vers les sièges cylindriques (24. 25) pour le montage de l'axe de pivotement (21. 22).

2. Elément de remplissage de carburant de véhicule selon la revendication 1, caractérisé en ce qu'il comprend deux axes de pivotement (21. 22). un ressort cylindrique (23) coaxial aux axes de pivotement (21, 22) étant interposé entre eux.

3. Elément de remplissage de carburant de véhicule selon la revendication 1 ou 2, caractérisé en ce qu'au moins un axe de pivotement (21, 22) est logé dans un trou débouchant (19) d'un bras (16) ayant pratiquement une forme en U et appartenant au couvercle (11).

4. Elément de remplissage de carburant pour véhicule selon la revendication 3, caractérisé en ce que le bras (16) a une cavité (20) adjacente au trou débouchant (19) et parallèle à celui-ci, et en ce que l'axe ou les axes de pivotement (21, 22) logent des goupilles (33, 34) qui dépassent et pénètrent dans la cavité (20).

streckenden Hohlraum (20) aufweist, und daß der (die) Schwenkzapfen (21,22) in den Hohlraum (20) eingesetzte, vorragende Stifte (33,34) aufnimmt (aufnehmen).

**Ansprüche**

1. Kraftstoff-Füllstutzeneinheit eines Fahrzeuges mit einem topfförmigen Körper (10), einem daran angelenkten Deckel (11) und einem Auflager (36) zur Halterung elektrisch betätigbarer Verriegelungsmittel (50,51) für den Deckel (11), wobei der topfförmige Körper (10), der Deckel (11) und das Auflager (36) am Metallblech (42) der Karosserie des Kraftfahrzeuges an einer in der Karosserie vorgesehenen Öffnung (52A) festlegbar sind, dadurch gekennzeichnet, daß das Auflager (36) einstückig mit dem topfförmigen Körper (10) ausgebildet ist und daß der topfförmige Körper (10) dem Auflager (36) gegenüberliegend einander gegenüberliegende vorstehende Wandbereiche mit zwei zueinander gewandten zylindrischen Sitzen (24,25) umfaßt, welche nachgiebig wenigstens einen Schwenkzapfen (21,22) des Deckels (11) aufnehmen, wobei sich Einbringungsführungen (26,27) in den Wandbereichen von der Innenseite des topfförmigen Körpers (10) zu den zylindrischen Sitzen (24,25) für den Einbau des Schwenkzapfens (21,22) erstrecken.

2. Kraftstoff-Füllstutzeneinheit eines Fahrzeuges nach Anspruch 1, dadurch gekennzeichnet, daß zwei Schwenkzapfen (21,22) unter Zwischenschaltung einer zu den Schwenkzapfen (21,22) koaxialen Schraubenfeder (23) vorgesehen sind.

3. Kraftstoff-Füllstutzeneinheit eines Fahrzeuges nach Anspruch 1 oder 2, dadurch gekennzeichnet, daß wenigstens ein Schwenkzapfen (21,22) in einer durchgehenden Bohrung (19) eines im wesentlichen "U"-förmigen Armes (16) des Deckels (11) angeordnet ist.

4. Kraftstoff-Füllstutzeneinheit einem Fahrzeuges nach Anspruch 3, dadurch gekennzeichnet, daß der Arm (16) einen sich nahe der und parallel zur durchgehenden Bohrung (19) er-

Fig.1

**Fig.2**

# Fig.3